Europäisches Patentamt

European Patent Office

Office européen des brevets

(19)

(11) Veröffentlichungsnummer: **0 349 913**
**A2**

(12) **EUROPÄISCHE PATENTANMELDUNG**

(21) Anmeldenummer: **89111902.6**

(22) Anmeldetag: **30.06.89**

(51) Int. Cl.⁴: **B60P 3/38**

(30) Priorität: **02.07.88 DE 3822418**

(43) Veröffentlichungstag der Anmeldung:
**10.01.90 Patentblatt 90/02**

(84) Benannte Vertragsstaaten:
**FR GB IT NL SE**

(71) Anmelder: **Daimler-Benz Aktiengesellschaft**
**Postfach 600202 Mercedesstrasse 136**
**D-7000 Stuttgart 60(DE)**

(72) Erfinder: **Schmitt, Klaus**
**Hermann-Kurz-Strasse 15**
**D-7032 Sindelfingen 6(DE)**

(54) **Dachschlafkabine für ein Fahrerhaus eines Kraftwagens.**

(57) Die Erfindung betrifft eine Dachschlafkabine für ein Fahrerhaus eines Kraftwagens, mit einem gegenüber dem Fahrerhaus verbreiterten Kabinenboden, die mittels mehrerer Klemmelemente lösbar an seitlichen Regenrinnen befestigbar ist, wobei der Kabinenboden entlang den Regenrinnen über beidseitig mindestens einen Standfuß auf dem Dach des Fahrerhauses aufstehend abgestützt ist, und wobei als Klemmelemente die Regenrinne hintergreifende, mit dem zugeordneten Standfuß verspannbare Spannpratzen vorgesehen sind. Um den Kabinenkörper der Dachschlafkabine für verschieden breite Fahrerhäuser verwenden zu können, und gleichzeitig die Befestigungsintensität der Dachschlafkabine auf dem Fahrerhausdach zu verbessern, ist jeder Standfuß der Dachschlafkabine als separat montierbares Bauteil ausgebildet, dessen Aufstandsfläche auf den Ablaufquerschnitt der Regenrinne abgestimmt ist, und der Stützabstand der Standfüße ist in Breitenrichtung des Fahrerhauses gesehen veränderbar.

Fig.1

EP 0 349 913 A2

# Dachschlafkabine für ein Fahrerhaus eines Kraftwagens

Die Erfindung betrifft eine Dachschlafkabine für ein Fahrerhaus eines Kraftwagens der im Oberbegriff des Hauptanspruches angegebenen Art.

Eine derartige Dachschlafkabine ist von einem Prospekt der EBLA GmbH druckschriftlich bekannt.

Bei dieser Dachschlafkabine ist auf beiden Seiten des Fahrerhauses ein Standfuß vorgesehen, der sich durchgehend über die Seitenwandlänge der Dachschlafkabine erstreckt. Diese Standfüße sind an die zugeordnete Seitenwand der Dachschlafkabine angeformt und somit unlösbar mit ihr verbunden.

Da die Dachschlafkabine breiter ist als das Fahrerhaus, verlaufen die beiden Standfüße im Breitenquerschnitt gesehen schräg nach innen aufeinander zu, wodurch sie etwas oberhalb der seitlichen Regenrinnen auf dem Dach des Fahrerhauses aufstehen. Zur lösbaren Befestigung der Dachschlafkabine sind über die Länge der Standfüße verteilt jeweils drei Spannpratzen vorgesehen, durch deren Spannvorschub die Standfüße auf ihre Aufstandsfläche gepreßt werden.

Die Wasserablauffunktion der seitlichen Regenrinnen des Fahrerhauses dürfte bei diesem Befestigungskonzept erhalten bleiben.
Auch kann die Dachschlafkabine problemlos von einem Fahrerhaus auf ein anderes baugleiches Fahrerhaus umgesetzt werden. Allerdings muß die Dachschlafkabine exakt an die Dachfläche des Basisfahrzeugs angepaßt sein, wodurch sie sich nicht auf Fahrerhäusern unterschiedlicher Baureihen von Lastkraftwagen verwenden läßt, die sich in der Regel insbesondere hinsichtlich ihrer Fahrerhausbreite voneinander unterscheiden.

Zudem dürfte auch die Befestigungsintensität der Klemmverbindungen allein unzureichend sein, da die Regenrinnen beim zu starken Anziehen der spannpratzenseitigen Spannschrauben hochgebogen werden könnten.

Daher liegt der Erfindung die Aufgabe zugrunde, eine gattungsgemäße Dachschlafkabine dahingehend weiterzuentwickeln, daß sie auf Fahrerhausdächern unterschiedlicher Breite verwendbar und klemmsicher befestigbar ist.

Die erfindungsgemäße Lösung dieser Aufgabe ergibt sich aus den kennzeichnenden Merkmalen des Hauptanspruchs, wobei der Stützabstand der Standfüße exakt auf den Abstand zwischen den seitlichen Regenrinnen des jeweiligen Basisfahrerhauses abgestimmt werden kann, wodurch die Aufstandsflächen im Ablaufquerschnitt der Regenrinnen aufstehen. Somit liegt die Regenrinne des Fahrerhauses beim Klemmvorgang hochbiegegeschützt zwischen der Aufstandsfläche des Standfußes und der zugeordneten Spannpratze.

Der Stützabstand der Standfüße läßt sich auf einfache Weise dadurch verändern, daß die Standfüße in unterschiedlichem Abstand voneinander mit dem Kabinenboden verschraubt werden können. Allerdings reicht dieser Umrüstvorgang nur für eine Grobeinstellung des Stützabstandes aus.

Eine besonders einfache Feineinstellung des Stützabstandes der Standfüße ist dadurch möglich, daß die Standfüße als Stützwinkel ausgebildet sind, deren Befestigungsschenkel auf der Unterseite des Kabinenbodens schiebegeführt sind, wobei sie über ihrem Verstellweg möglichst stufenlos gegenüber dem Kabinenboden fixierbar sein müssen.

Ferner ist es vorteilhaft, wenn auch die Stützhöhe jedes Standfußes möglichst stufenlos einstellbar ist, da hierdurch eine Anpassung an unterschiedliche Dachhöhen von Fahrerhausdächern möglich ist bzw. ein unterschiedlicher Höhenversatz zwischen den Regenrinnen und der Dachoberkante ausgeglichen werden kann.

Eine besonders einfache und gewichtsgünstige, stufenlose Verstellmöglichkeit für die Standfüße kann mittels einer Langlochverstellung erzielt werden.

Ebenfalls aus Gewichtsgründen ist es zweckmäßig, beidseitig der Dachschlafkabine nicht einen durchgehenden Standfuß, sondern mehrere schlanke Standfüße vorzusehen. Wegen der nicht unerheblichen Stützhöhe der Standfüße ergäben sich im Fahrbetrieb in diesem Bereich erhebliche Turbulenzen durch den Fahrtwind. Darüber hinaus würde auch der ästhetische Eindruck der Dachschlafkabine beeinträchtigt. Daher ist es zweckmäßig, die beiden Standfußreihen außenseitig mittels einer Sichtblende zu verkleiden.

Vorteilhaft läßt sich die Sichtblende als Leiteinrichtung für vom Dachschlafkabinenkörper ablaufendes Wasser nutzen, wenn ihr oberer Randbereich in einem Abstand zur gegenüberliegenden Seitenwandfläche der Dachschlafkabine angebracht ist. Hierdurch kann das aufgefangene Wasser innenseitig der Sichtblende hinabrinnen, wo es von einer an der Sichtblende angeordneten zusätzlichen Regenrinne aufgefangen und abgeleitet werden kann.

Die zusätzliche Regenrinne verhindert, daß die im Ablaufquerschnitt reduzierten Regenrinnen des Fahrerhauses überlaufen und die Seitenscheiben des Fahrerhauses benetzen.

Wird die Sichtblende im Nahbereich des Kabinenbodens klappenartig angeschlagen, so läßt sich die Dachschlafkabine umsetzen, ohne daß die Sichtblenden abgenommen werden müßten.

Als besonders montagefreundlich hat sich dabei eine Hakeneinhängung herausgestellt. Sie bietet darüber hinaus gemeinsam mit weiteren Maßnahmen gute Voraussetzungen für eine toleranzausgleichende Befestigung der Sichtblende als solche.

Bei dreidimensionaler Ausrichtbarkeit der Dachschlafkabine ist es ferner möglich, eine nach oben gerichtete Dichtung der Dachlukenöffnung zur Abdichtung gegenüber einer Durchstiegsöffnung im Kabinenboden mitzunutzen. Eine zusätzliche Dichtanordnung ist somit entbehrlich.

Im folgenden ist ein Ausführungsbeispiel der Erfindung anhand einer zeichnerischen Darstellung näher erläutert.

Es zeigen:

Fig. 1 eine Seitenansicht einer Dachschlafkabine auf einem Fahrerhaus eines LKW,

Fig. 2 einen Vertikalschnitt gemäß der Linie II-II in Fig. 1,

Fig. 3 einen Vertikalschnitt gemäß der Linie III-III in Fig. 1, und

Fig. 4 einen Horizontalschnitt durch den Einstiegsbereich im Kabinenboden.

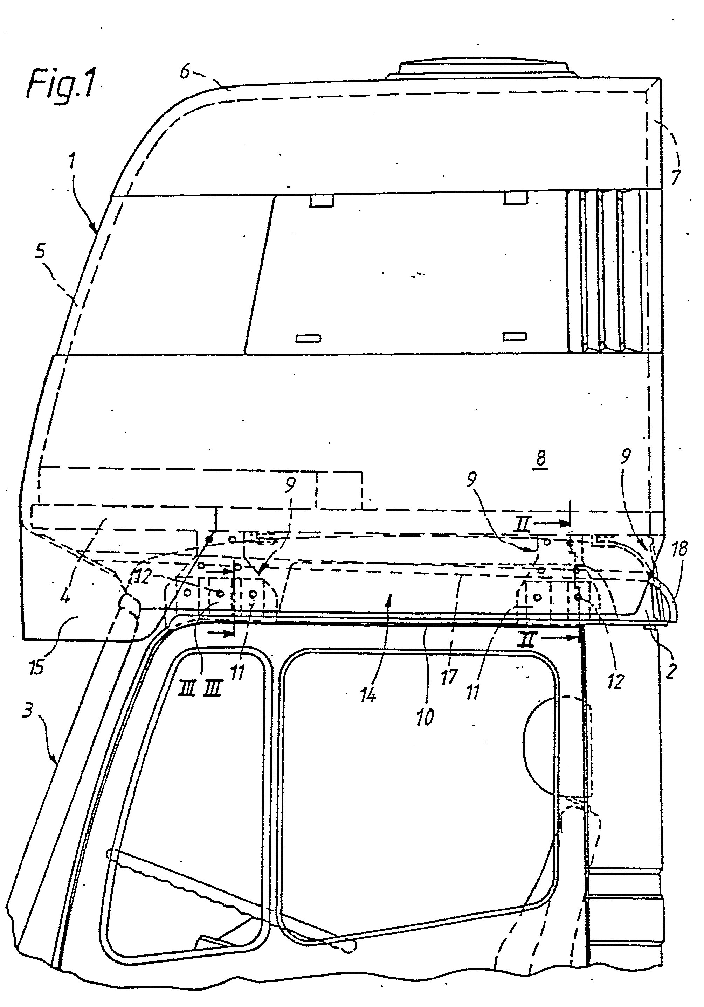

Aus Fig. 1 ist die Anordnung einer Dachschlafkabine I auf einem Dach 2 eines kurzen Fahrerhauses 3 eines Lastkraftwagens mit Kastenaufbau zu entnehmen. Der gesamte Körper der Dachschlafkabine 1, der einen ebenen Kabinenboden 4, eine Vorderwand 5, ein Kabinendach 6, eine Rückwand 7 und zwei Seitenwände 8 umfaßt, ist nach einem GFK-Sandwichverfahren hergestellt und daher relativ leicht. Der Kabinenkörper ist länger und breiter als das Fahrerhaus 3 und ragt daher seitlich und vorn über das Dach 2 hinaus. Er ist über sechs Standfüße 9 auf dem Dach 2 befestigt, wobei hinten und seitlich jeweils zwei Standfüße 9 auf die Traglänge verteilt angeordnet sind. Die Standfüße 9 stehen mit ihrem unteren Ende formschlüssig im Ablaufquerschnitt einer Regenrinne 10 auf, die den unteren Abschluß des Daches 2 bildet, und die seitlich und hinten um das Dach 2 herumgezogen ist. Zur Halterung sind die Standfüße 9 über großformatige Spannpratzen II, die die Regenrinne 10 formschlüssig mit einem Hakenprofil hinter- bzw. umgreifen in der Regenrinne 10 verspannt, wobei übliche Spannschrauben 12 Verwendung finden. Da die Regenrinne 10 dabei formschlüssig zwischen dem unteren Ende der Standfüße 9 und dem Hakenprofil der Spannpratzen 11 gehalten ist, können auch große Klemmkräfte nicht zum Hochbiegen der Regenrinne 10 führen.

Von ihrem unteren Ende ausgehend erstrecken sich die Standfüße 9 nahezu senkrecht bis dicht unter die Unterseite des Kabinenbodens 4, wo sie in einen rechtwinkligen Befestigungsschenkel 9a übergehen, der flächig an der Unterseite des Kabinenbodens 4 anliegt.

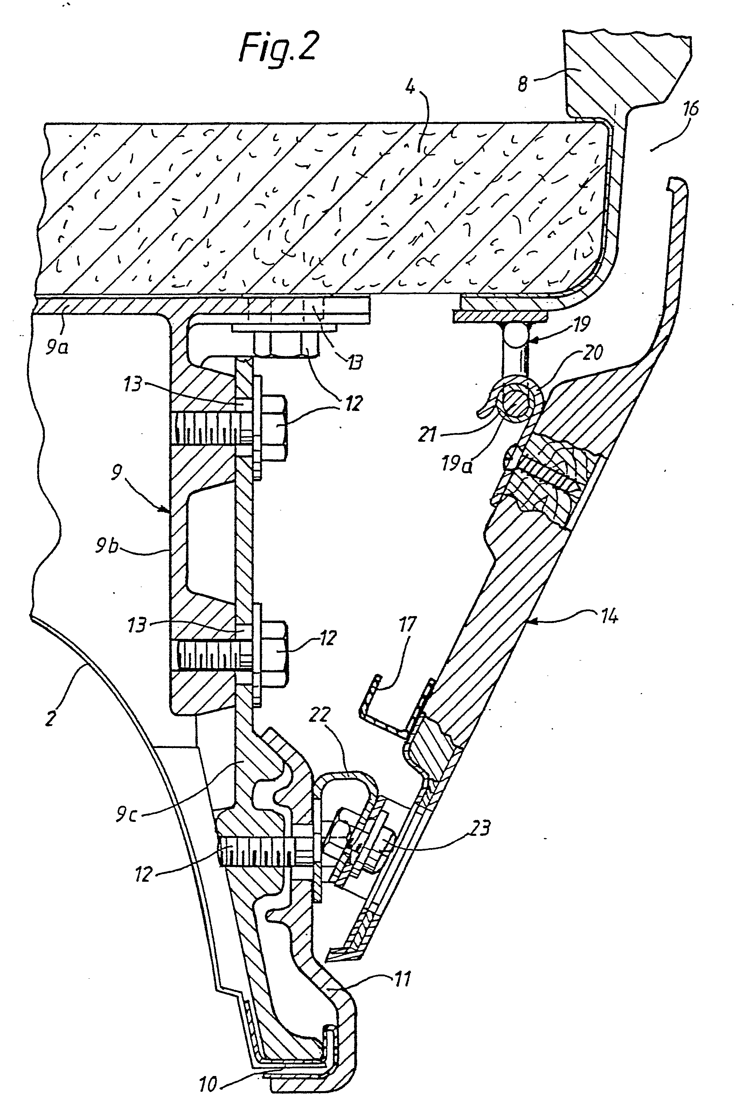

Wie in Verbindung mit Fig. 2 erkennbar ist, befinden sich im Befestigungsschenkel 9a überdimensionierte Bohrungen 13, durch die der Befestigungsschenkel 9a mit dem Kabinenboden 4 verschraubt ist. Hierzu ist in nicht dargestellter Weise eine Schraubbuchse in den Kabinenboden 4 eingesetzt, in deren Innengewinde eine Spannschraube 12 eingedreht ist. Bei etwas gelöster Spannschraube 12 kann der Befestigungsflansch 9a zwischen dem breiten Schraubenkopf der Spannschraube 12 und der Unterseite des Kabinenbodens 4 schiebegeführt gleiten. Der mögliche Verstellweg ist hierbei relativ klein und reicht nur zum Ausgleich üblicher Rohbautoleranzen bei Fahrerhäusern aus. Alternativ wäre es jedoch denkbar, die von der Bohrung 13 gebildete Langlochführung in Breitenrichtung des Kabinenbodens 4 soweit auszudehnen, daß ein ausreichender Verstellbereich zur Anpassung an unterschiedlich breite Fahrerhäuser verfügbar ist. Die Vorbereitung neuer Schraubpunkte beim Wechsel des Basisfahrerhauses könnte dadurch entfallen.

Zusätzlich zur Einstellmöglichkeit der Standfüße 9 in der Ebene des Kabinenbodens 4, sind die Standfüße 9 in ihrer Stützhöhe einstellbar. Hierzu ist der senkrecht stehende Längenabschnitt der Standfüße 9 zweiteilig ausgebildet, wobei die beiden Säulenabschnitte 9b und 9c einander über einen Höhenbereich überdeckend nebeneinander liegen. Die Höhenverstellung funktioniert hier ebenfalls nach dem Prinzip der Langlochverstellung, wobei zwei im Überdeckungsbereich angeordnete Spannschrauben 12 jeweils eine zugeordnete, überdimensionale Bohrung 13 des Säulenabschnitts 9c durchsetzen und in gegenüberliegende Gewindebohrungen des Säulenabschnitts 9b eingeschraubt sind. Bei angezogenen Spannschrauben 12 sind die Säulenabschnitte 9b und 9c reibschlüssig aufeinanderliegend höhenfixiert. Auch die dargestellte Höheneinstellung der Standfüße 9 läßt nur relativ geringe Verstellwege zu, die jedoch ebenfalls durch eine geänderte Bemessung der Langlöcher vergrößert werden könnten.

Die beiden links- und rechtsseitig angeordneten Standfüße 9 können zur Seite hin und ggf. auch nach vorn durch Sichtblenden 14 abgedeckt sein. Im vorliegenden Fall ist der Frontbereich zwischen dem Dachkabinenkörper und dem Dach 2 durch eine Sonnenblende 15 abgedeckt, so daß nur seitliche Sichtblenden 14 vorgesehen sind. Diese Sichtblenden 14 sind als einteilige, formstabile Platten ausgebildet, die sich über die gesamte Länge des Fahrerhauses 3 erstrecken. Die Breite der beiden spiegelsymmetrisch zueinander gestalteten Sichtblenden 14 ist so bemessen, daß sie den unteren Randabschnitt der Seitenwand 8 außenseitig überdecken und unten nahezu an die Regenrinne 10 heranreichen. Dabei verläuft der die Seitenwand 8 überdeckende Breitenabschnitt der Sichtblenden 14 im Querschnitt gesehen parallel zur Seitenwandebene und geht danach in einen schräg auf die Regenrinne 10 zulaufenden Breitenabschnitt über.

Im Überdeckungsbereich ist die untere Randzone der Seitenwand 8 derart vertieft, daß der obere Breitenabschnitt der Sichtblende 14 unter Einhaltung einer An-schlußfuge 16 flächenbündig in der Seitenwandebene liegt und einen seitlichen Abstand zur Vertiefung einhält. Aufgrund dieser Anordnung tritt an der Dachschlafkabine 1 seitlich ablaufendes Wasser durch die Anschlußfuge 16 auf die rückwärtige Seite der Sichtblende 14 uber und wird von einer Regenrinne 17 aufgefangen, die an der Sichtblende 14 angebracht ist. Diese zusätzliche Regenrinne 17 erstreckt sich über die gesamte Länge der Sichtblende 14 und ist mit Gefälle nach hinten verlegt. Sie endet in einem Ablaufstutzen 18 durch den das Wasser hinter der Rückwand des Fahrerhauses 3 abfließen kann.

Zur Anbringung der Sichtblende 14 ist eine Vierpunktbefestigung vorgesehen, die zwei Einhängungspunkte und zwei Schraubpunkte umfaßt. Die beiden Einhängungspunkte liegen etwas unterhalb des Kabinenbodens 4, unter dem zwei Lagerangeln 19 verschraubt sind. Dabei verlaufen die Lagerbolzen 19a in einer horizontalen Längsflucht liegend parallel zur Mittellängsachse der Dachschlafkabine 1. Den Lagerbolzen 19a zugeordnet, sind auf die Innenseite der Sichtblende 14 zwei Blechhaken 20 aufgeschraubt, deren Gabelöffnung nach unten gerichtet ist. Bei auf die Lagerbolzen 19a aufgesteckten bzw. aufgeschobenen Haken 20 läßt sich die Sichtblende 14 klappenartig vom Fahrerhaus 3 wegschwenken bis sie etwa senkrecht verläuft. In dieser Stellung sind alle Spannschrauben 12 der dahinterliegenden Standfüße 9 zugänglich.

Damit durch die Hakeneinhängung Toleranzen aufgenommen werden können und die Haken 20 trotzdem spielfrei mit den zugeordneten Lagerbolzen 19a zusammenwirken, ist auf die Lagerbolzen 19a eine elastomere Zwischenhülse 21 aufgeschoben. Somit treten bei der Hakeneinhängung unter Schwingungsbelastung keine Klappergeräusche auf. Die Schraubbefestigungspunkte der Sichtblende 14 befinden sich im Nahbereich ihres unteren Randes auf den Spannpratzen 11. Damit sich die Sichtblende beim Anziehen der Befestigungsschrauben nicht verformen kann ist auf den Spannpratzen 11 ein keilförmiger Schraubensitz vorgesehen.

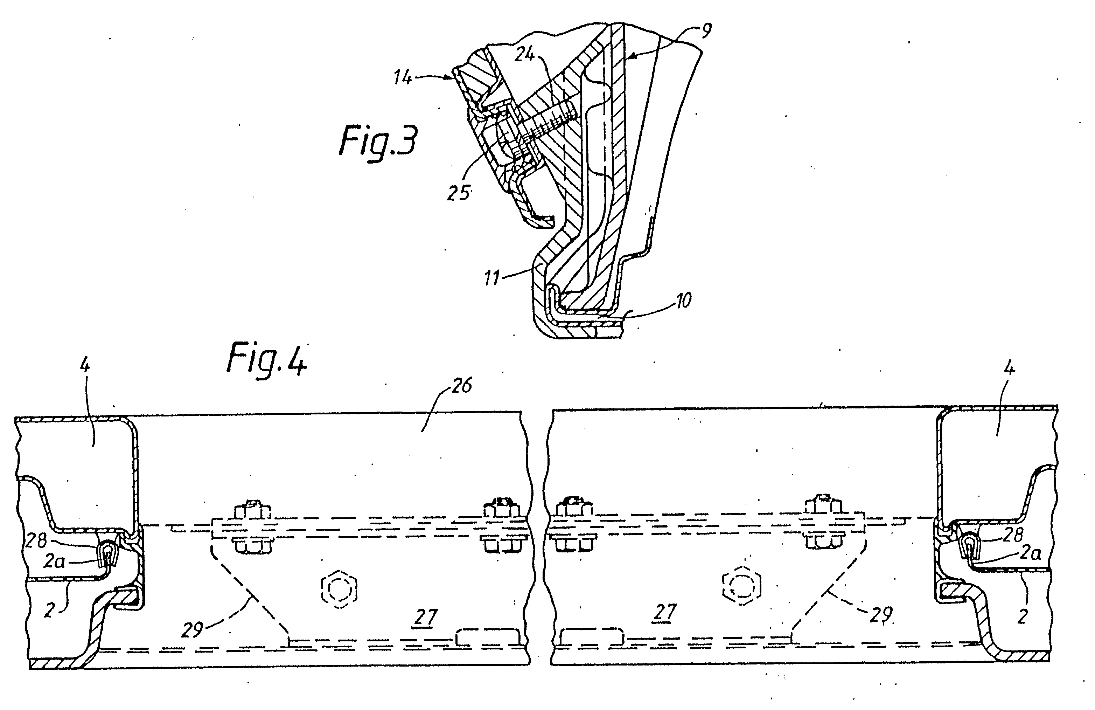

Der Schraubensitz der hinteren seitlichen Standfüße 9 wird von einem keilförmig gebogenen Blechlappen 22 gebildet, der zwei Durchgangsbohrungen aufweist. Zur Halterung des Blechlappens 22 ist der Schaft der Spannschraube 12 durch eine der Durchgangsbohrungen hindurchgesteckt, so daß der Blechlappen 22 beim Anziehen der Spannschraube 12 reibschlüssig zwischen dem Schraubenkopf und der Gegenfläche der Spannpratze 11 festgelegt ist. Bei fixiertem Blechlappen kann die Sichtblende 14 mittels einer Durchgangsschraubbefestigung 23 mit dem Blechlappen 22 verbunden werden. An die vorderen Spannpratzen 11 ist wie aus Fig. 3 ersichtlich, eine Keilfläche an die Spannpratze 11 angeformt, die mit einer Gewindebohrung 24 versehen ist, welche senkrecht zur Schrägung der Keilfläche steht. Unter flächiger Anlage auf der Keilfläche läßt sich die gegenüberliegende Randfläche der Sichtblende 14 mit einer Befestigungsschraube 25 verspannen.

Dieser Befestigungspunkt der Sichtblende 14 ist der einzige völlig starre, während die Einhängungspunkte oben sowie auch der Befestigungspunkt am Blechlappen 22 elastisch nachgiebig sind. Dadurch läßt sich die Sichtblende 14 verwindungsfrei montieren.

Wie aus Fig. 4 ersichtlich ist, befindet sich im Kabinenboden 4 eine Durchstiegsöffnung 26, durch die man durch eine Dachlukenöffnung 27 aus dem Innenraum des Fahrerhauses 3 in die Dachschlafkabine 1 hineinklettern kann.

Die Dachlukenöffnung 27 ist von einem umlaufenden Kragen 2a eingefaßt, der aufrecht nach oben gerichtet ist. Auf den Kragen 2a ist eine Profildichtung 28 mit einem gabelförmigen Befestigungsschenkel aufgeschoben und dadurch reibschlüssig auf dem Kragen 2a gehalten. Die Hohlkammer der Profildichtung 28 liegt oberhalb des Kragens teilweise eingefedert auf der Unterseite des Kabinenbodens 4 an. Somit werden die Durchstiegsöffnung 26 und die Dachlukenöffnung 27 mittels der normalen Profildichtung 28 für einen Dachlukendeckel, der zum Aufsetzen der Dachschlafkabine 1 abgenommen werden muß, gegeneinander abgedichtet. Um zu verhindern, daß die Profildichtung 28 infolge von Durchfederbewegungen des Kabinenbodens 4 zerstört werden kann, sind umfangsseitig der Dichtanordnung zwischen dem Kabinenboden 4 und dem Dach 2 des Fahrerhauses 3 anschlagende Distanzelemente 29 vorgesehen. Diese Distanzelemente 29 bestehen aus U-förmigen Profilen aus Aluminium, die unter dem Kabinenboden 4 verschraubt sind und auf dem Dach 2 aufstehen. Die Höhe der Distanzelemente 29 ist so bemessen, daß der gewünschte Einfederzustand der Profildichtung 28 bei flächig auf dem Dach 2 anliegenden Distanzelementen 29 erreicht ist. Hierdurch wird die Montage der Dachschlafkabine 1 erleichtert, da sie zunächst bei hochgestellten Standfüßen 9 aufgesetzt werden kann, wodurch sie bereits exakt parallel zum Dach 2 aufsteht. Anschließend werden die Standfüße 9 nach unten ausgezogen, bis sie in der Dachrinne 10 aufstehen und anschließend wieder fixiert. Ein derartig vereinfachter Montagevorgang ist jedoch nur dann möglich, wenn die Distanzelemente 29 exakt auf den zwischen Dach 2 und Kabinenboden 4 vorliegenden Abstand abgestimmt sind. Beim Wechsel der Dachschlafkabine 1 von einem Dach 3 auf das Dach eines anderen Fahrerhaustyps wird daher in der Regel ein Satz neuer Distanzelemente 29 erforderlich sein.

Falls die Breitenunterschiede zwischen den Basisfahrerhäusern, für die die Dachschlafkabine 1 vorgesehen ist, zu groß werden, ist ferner ein Austausch der Sichtblenden 14 gegen entsprechend angepaßte Ausführungsformen erforderlich.

Der Kostenaufwand, der mit solchen Adaptionsmaßnahmen verbunden ist, ist jedoch wesentlich geringer, als wenn auf jeden Fahrerhaustyp ein Dachschlafkabinentyp "zugeschnitten" werden müßte.

## Ansprüche

1. Dachschlafkabine für ein Fahrerhaus eines Kraftwagens, mit einem gegenüber dem Fahrerhaus verbreiterten Kabinenboden, die mittels mehrerer Klemmelemente lösbar an seitlichen Regenrinnen befestigbar ist, wobei der Kabinenboden entlang den Regenrinnen beidseitig über Standfüße auf dem Dach des Fahrerhauses aufstehend abgestützt ist, und wobei als Klemmelemente die Regenrinne hintergreifende, mit dem zugeordneten Standfuß verspannbare Spannpratzen vorgesehen sind,
**dadurch gekennzeichnet,**
daß jeder Standfuß (9) der Dachschlafkabine (1) als separat montierbares Bauteil ausgebildet ist, dessen Aufstandsfläche auf den Ablaufquerschnitt der Regenrinne (10) des Fahrerhauses (1) abgestimmt ist, daß der Stützabstand der Standfüße (9) in Breitenrichtung des Fahrerhauses (3) gesehen veränderbar ist, und daß jede der Standfußreihen seitlich des Fahrerhauses (3) mittels einer plattenartigen Sichtblende (14) nahezu vollständig abdeckbar ist.

2. Dachschlafkabine nach Anspruch 1,
**dadurch gekennzeichnet,**
daß die Standfüße (9) als Stützwinkel ausgebildet sind, wobei ein Befestigungsschenkel (9a) jedes Standfußes (9) kabinenbodenseitig schiebegeführt ist.

3. Dachschlafkabine nach Anspruch 1,
**dadurch gekennzeichnet,**
daß die Stützhöhe jedes Standfußes (9) einstellbar ist.

4. Dachschlafkabine nach Anspruch 2 oder 3,
**dadurch gekennzeichnet,**
daß die Standfüße (9) über eine Langlochverstellung einstellbar sind.

5. Dachschlafkabine nach Anspruch 1,
**dadurch gekennzeichnet,**
daß ein oberer Breitenabschnitt der angebrachten Sichtblende (14) einen unteren Randabschnitt der zugeordneten Seitenwand (8) der Dachschlafkabine (1) etwa parallel zu dieser verlaufend überdeckt und unterhalb des Breitenabschnittes in einen schräg auf die Regenrinne (10) zulaufenden Breitenabschnitt übergeht.

6. Dachschlafkabine nach Anspruch 5,
**dadurch gekennzeichnet,**
daß der obere Breitenabschnitt der Sichtblende (14) in einem Tiefenabstand zur gegenüberliegenden Seitenwandfläche anbringbar ist.

7. Dachschlafkabine nach Anspruch 6,
**dadurch gekennzeichnet,**
daß der überdeckte Randabschnitt der Seitenwand (8) gegenüber der Seitenwandebene vertieft ist, und daß der obere Breitenabschnitt der Sichtblende (14) unter Einhaltung einer Anschlußfuge (16) flächenbündig in die Seitenwandebene der Dachschlafkabine (1) integriert ist.

8. Dachschlafkabine nach Anspruch 6,
**dadurch gekennzeichnet,**
daß innenseitig der Sichtblende (14) eine Regenrinne (10) angeordnet ist.

9. Dachschlafkabine nach einem oder mehreren der vorhergehenden Ansprüche,
**dadurch gekennzeichnet,**
daß die Sichtblende (14) im Nahbereich des Kabinenbodens (4) anlenkbar ist.

10. Dachschlafkabine nach Anspruch 9,
**dadurch gekennzeichnet,**
daß innenseitig der Sichtblende (14) mehrere Haken (20) angebracht sind, die jeweils auf einem zugeordneten, sich etwa parallel zur Mittellängsachse der Dachschlafkabine (1) erstreckenden, kabinenbodenfesten Lagerbolzen (19a) aufsteckbar sind.

11. Dachschlafkabine nach Anspruch 10,
**dadurch gekennzeichnet,**
daß zwischen jedem Lagerbolzen (19a) und dem zugeordneten Haken (20) eine elastomere Zwischenhülse (21) angeordnet ist.

12. Dachschlafkabine nach Anspruch 1,
**dadurch gekennzeichnet,**
daß die Sichtblende (14) im Bereich ihres unteren Randes schraubbefestigbar ist.

13. Dachschlafkabine nach Anspruch 12,
**dadurch gekennzeichnet,**
daß auf jeder von der Sichtblende (14) abgedeckten Spannpratze (11) ein Schraubpunkt vorgesehen ist.

14. Dachschlafkabine nach Anspruch 13,
**dadurch gekennzeichnet,**
daß außenseitig der Spannpratze (11) ein keilförmiger Schraubensitz vorhanden ist.

15. Dachschlafkabine nach Anspruch 14,
**dadurch gekennzeichnet,**
daß der Schraubensitz an die Spannpratze (11) angeformt und mit einer Gewindebohrung (24) versehen ist.

16. Dachschlafkabine nach Anspruch 14,

**dadurch gekennzeichnet,**

daß der Schraubensitz von einem keilförmig gebogenen Blechlappen (22) mit Durchgangsbohrungen gebildet ist.

17. Dachschlafkabine nach Anspruch 16,

**dadurch gekennzeichnet,**

daß der Blechlappen (22) uber die Spannschraube (12) der Spannpratze (11) mitbefestigbar ist.

18. Dachschlafkabine nach Anspruch 1,

**dadurch gekennzeichnet,**

daß aus dem Kabinenboden (4) eine Durchstiegsöffnung (26) ausgespart ist, die oberhalb einer Dachlukenöffnung (27) des Fahrerhauses (3) ausgerichtet positionierbar ist.

19. Dachschlafkabine nach Anspruch 18,

**dadurch gekennzeichnet,**

daß die Dachlukenöffnung (27) einen umlaufenden Kragen (2a) mit einer aufwärts gerichtet ausfederbaren Dichtung (Profildichtung 28) aufweist, und daß die Dichtung (Profildichtung 28) bei aufgesetzter Dachschlafkabine (1) entlang einer Randzone der Durchstiegsöffnung (26) mit Vorspannung auf einer Gegenfläche des Kabinenbodens (4) anliegt.

*Fig.1*

# Fig.2

Fig.3

Fig.4